# EUROPEAN PATENT APPLICATION

(11) **EP 4 851 859 A1**
(43) Date of publication of application: **09.12.2026**
(21) Application number: 25305828.3
(22) Date of filing: 06.06.2025
(51) Int. Cl.: G06N 3/045, G06N 3/098, G06N 3/094

(54) **METHOD AND SYSTEM FOR GENERATING A TASK-SPECIFIC REPRESENTATION FOR CLASSIFICATION**

(71) Applicant: Orange, 92130 Issy-les-Moulineaux (FR)
(72) Inventor: PLESA, Mihail, 020334 BUCHAREST (RO); POENARU, Robert, 020334 BUCHAREST (RO)
(74) Representative: Plasseraud IP

(57) **Abstract**

The disclosure relates to a computer-implemented method for determining a representation for use in a classification task, the method comprising:
applying, during an inference task, an encoder to input data having a first dimensionality to produce an output digest having a second dimensionality lower than the first dimensionality,
wherein the encoder has been trained, during a training phase, jointly with a classifier using a classification loss function applied to an output of the classifier,
the output of the classifier being produced by applying the classifier to a training digest having the second dimensionality or a derivative of the training digest,
the training digest being produced by applying the encoder to input training data having the first dimensionality.

## Description

### DOMAIN

The disclosure belongs to the field of machine learning and classification systems.

In particular, there are disclosed a method for determining a representation for use in a classification task, and a corresponding encoder, computer system, computer program, and non-transitory computer-readable storage medium.

### BACKGROUND

Machine learning techniques are increasingly used to solve classification tasks involving various types of input data, including images, time-series, audio signals, and sensor measurements. In some cases, representations of the input data are computed prior to classification to improve efficiency, enable distributed processing, or enhance data protection.

Related techniques have explored ways to produce compact representations of input data to support classification, similarity search, or privacy protection.

For instance, it has been proposed to train neural networks that output binary codes without using non-differentiable binarization functions. In some variants, such binary outputs are constructed to be similar for similar inputs and exhibit balanced bit distributions. Other techniques have employed autoencoder architectures to transform input data in a way that suppresses certain sensitive attributes while preserving overall predictive utility. In these approaches, the encoder-decoder structure is typically trained to optimize privacy and accuracy simultaneously, but independently of any downstream classifier. There also exist frameworks in which multiple neural networks are trained to simulate the behavior of classical locality-sensitive hash functions. However, these systems focus on replicating known hash families rather than adapting the transformation to a specific classification model.

When designing such representations, it may be desirable to retain features relevant to the classification task while omitting unnecessary or sensitive information. This can support objectives such as bandwidth reduction, privacy preservation, or model robustness.

However, designing representations that balance these objectives remains a challenge.

### SUMMARY

The invention is defined by the appended independent claims. Additional features and advantages of the concepts herein disclosed are set forth in the description which follows.

The present disclosure aims at improving the situation.

To this end, the present disclosure describes a computer-implemented method for determining a representation for use in a classification task, the method comprising:
applying, during an inference task, an encoder to input data having a first dimensionality to produce an output digest having a second dimensionality lower than the first dimensionality,
wherein the encoder has been trained, during a training phase, jointly with a classifier using a classification loss function applied to an output of the classifier,
the output of the classifier being produced by applying the classifier to a training digest having the second dimensionality or a derivative of the training digest,
the training digest being produced by applying the encoder to input training data having the first dimensionality.

The present disclosure also describes an encoder configured to determine a representation for use in a classification task, the encoder being configured to, during an inference task:
receive input data having a first dimensionality to produce an output digest having a second dimensionality lower than the first dimensionality,
wherein the encoder has been trained, during a training phase, jointly with a classifier using a classification loss function applied to an output of the classifier,
the output of the classifier being produced by applying the classifier to a training digest having the second dimensionality or a derivative of the training digest,
the training digest being produced by applying the encoder to input training data having the first dimensionality.

The present disclosure also describes a computer system comprising the above encoder and the classifier trained jointly with the encoder.

The present disclosure also describes a computer program comprising instructions which, when executed by at least one processor, cause the processor to perform the above method.

The present disclosure also describes a non-transitory computer-readable storage medium storing instructions which, when executed by at least one processor, cause the processor to perform the above method

The proposed technique described in the present disclosure may provide many technical advantages over known methods and systems.

In particular, applying, during an inference task, an encoder to input data having a first dimensionality to produce an output digest having a second dimensionality lower than the first dimensionality may contribute to reducing memory, storage, or transmission requirements.

Training the encoder jointly with the classifier using a classification loss function applied to the classifier's output may help ensure that the digest retains class-discriminative information that favors high classification accuracy of the classifier.

As a result, the proposed technique may help balance classification accuracy and input abstraction, and may provide a structured approach to controlling the flow of information from the input data to the classification output.

The proposed technique described in the present disclosure may furthermore comprise the following features, taken alone or in combination.

In an example, the encoder is configured such that the output digest prevents reconstruction of the input data beyond a predefined error threshold, when applied to a reconstruction model trained on the same dataset.

This may contribute to enhanced privacy preservation, by reducing the risk of input data re-identification. The use of a predefined reconstruction threshold may provide a quantifiable control mechanism for evaluating or constraining information leakage.

In an example, the encoder is trained using an adversarial training scheme in which a generative model is penalized for accurately reconstructing the input training data from the training digest.

This may improve the encoder's robustness against reconstruction attacks.

In an example, the input training data is encrypted and the encoder is trained using a homomorphic encryption scheme.

Training the encoder on encrypted input training data may be beneficial in scenarios where confidentiality of the raw training data is required.

In an example, the derivative of the training digest is in plaintext.

This may facilitate efficient transmission or post-processing of digests, while also allowing preservation of some level of obfuscation, since the raw input data may remain unexposed.

In an example, the encoder and the classifier are trained collaboratively by a plurality of entities using encrypted or obfuscated input training data.

Support for multi-party training workflows (e.g., federated learning or collaborative AI), while maintaining data protection at each participating entity is a permanent concern in the field of machine learning.

In an example, the encoder is shared among a plurality of entities, and the training digests are produced locally at each entity without transmitting the input training data.

This may reduce the communication overhead and privacy risks typically associated with centralizing training data, while enabling consistent feature extraction across distributed participants.

In an example, the output digest is a fixed-length vector of numerical values.

This may simplify integration with downstream classifiers or processing modules, as fixed-length outputs are often more compatible with conventional ML pipelines and can facilitate batch processing or indexing.

In an example, the output digest is transmitted to a remote system for classification.

Cloud-based inference or distributed deployment, where the encoder runs on a local device and the digest is classified remotely, may contribute to reducing computation costs or device resource requirements..

### BRIEF DESCRIPTION OF THE DRAWINGS

Figure 1 illustrates, according to an exemplary embodiment of the invention, a classification system comprising an encoder and a classifier, functionally connected in series.
Figure 2 illustrates, according to another exemplary embodiment of the invention, a privacy-preserving classification system comprising a plurality of user devices and a classification system. The encoder operates on encrypted input data received from the user device, and the classifier produces an output class prediction based on a decrypted digest.
Figure 3 illustrates, according to an exemplary embodiment of the invention, a material architecture of a device configured to implement a classification method.

### DETAILED DESCRIPTION

### Overview of a proposed encoding method and system

The present disclosure describes, in exemplary embodiments, a proposed method for encoding input data for use in a classification task.

The result of the encoding is a representation, referred to herein as a digest, which may serve as an intermediate structure generated prior to classification. The digest is more compact than the input data and is designed to retain information relevant to the classification task while omitting residual information. As a result, the digest may be designed to prevent a high-fidelity reconstruction of the input data.

The method is implemented by a data processing system comprising at least an encoder, and optionally a classifier configured to perform the classification task. The encoder and classifier may be executed on the same device or on separate devices, for example in a distributed or client-server architecture.

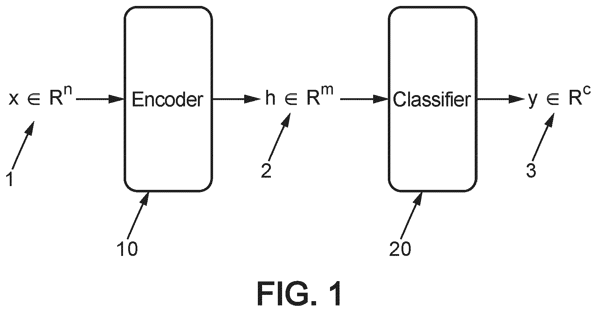

Figure 1 schematically illustrates a classification system according to an exemplary embodiment. The classification system comprises an encoder 10 adapted to implement the proposed method and a classifier 20. The encoder and the classifier are functionally connected in series.

An input data sample 1 may be represented as a vector $x ∈ {ℝ}^{n}$, where *n* denotes the dimensionality of an input data sample space.

The input data sample 1 is received by the encoder 10, which transforms it into a digest 2 which may be represented as a vector $h ∈ {ℝ}^{m}$, where *m < n* and where *m* denotes the dimensionality of a digest space.

The digest 2, or a derivative of the digest obtained by further processing, is then provided to the classifier 20, which processes it to produce an output class prediction 3.

The output class prediction 3 may be represented as a vector $y ∈ {ℝ}^{c}$, where *c* corresponds to a number of predefined classes in a classification task. The output may, for example, encode class scores, a class probability distribution, or a one-hot vector indicating the predicted label.

Two main operational phases may be defined in relation with Figure 1: a training phase and an inference phase.

During the training phase, the encoder 10 and the classifier 20 perform training tasks. During a training task, the encoder is applied to an input training data sample to produce a corresponding training digest with a dimensionality lower than that of the input data. The classifier 20 receives this training digest or a derivative thereof and produces a corresponding classification output. This classification output is compared to a label associated with the training input data sample, and a discrepancy, or loss, is measured using a classification loss function. The loss is then used to update the parameters of both the encoder and the classifier. In exemplary implementations, the loss is backpropagated through the classifier and then through the encoder. This joint training enables the encoder to learn to produce digests that retain class-discriminative features while omitting or compressing residual features not needed for classification or potentially compromising user privacy.

During the inference phase, the encoder 10 and the classifier 20 perform inference tasks. During an inference task, the encoder 10 is applied to a new, unlabeled input data sample to produce a digest, which is then classified by the classifier 20. The digest is generated with a dimensionality lower than that of the input data, consistent with the training phase.

The proposed method and system are applicable to a wide range of classification tasks involving structured or unstructured input data. Examples include image data, time-series data, audio signals, text embeddings, biometric measurements, or sensor outputs. The digest may take the form of a fixed-length feature vector, a set of projection coefficients, or any structured or unstructured compact representation. The encoding process enables transformation of such inputs into a form that preserves task-relevant content while minimizing exposure of other data, thereby supporting privacy, compression, or transmission efficiency.

### Terminology

Several definitions are now provided to facilitate the understanding of the present disclosure.

A classification task refers to the assignment of input data to one of a set of predefined categories or labels. The task may be binary (two possible labels), multiclass (more than two mutually exclusive labels), or multilabel (multiple labels assigned simultaneously). Examples include classifying images into object types, categorizing audio clips by speaker, or assigning tags to text segments.

A classifier is a functional module configured to produce a prediction for a classification task. In general, a classifier may be configured to receive either input data or a transformation of said input data. The output of a classifier may include a discrete label, a list of top-ranked labels, a vector of class scores, or a probability distribution.

In the context of the present disclosure, the classifier does not receive the input data directly. Instead, the classifier is configured to receive, as input, either a digest produced by an encoder from the input data or a derivative of such digest.

An encoder is a functional module configured to receive input data and to produce an encoded representation of the input data, referred to herein as a digest.

In the context of the present disclosure, the encoder is designed to reduce the dimensionality of the input. This means that the digest only contains a subset of the information present in the input data. The digest may be represented as a fixed-length vector, a structured embedding, or another compact data format.

Dimensionality, in the context of the present disclosure, refers to the number of scalar components in a data representation. For example, an input vector of 1024 real-valued elements has a dimensionality of 1024. Dimensionality may be reduced through encoding techniques that map the input into a lower-dimensional space.

A derivative of a digest refers to any transformation of the digest. This may include, for example, normalization, noise addition, quantization, encryption, decryption, or projection into another space. Derivatives may be used to satisfy deployment constraints, improve robustness, or enhance privacy.

A neural network refers to a computational architecture composed of multiple layers of interconnected processing units, also known as neurons. Each layer typically applies a mathematical transformation to its input, often consisting of a linear transformation followed by a non-linear activation function. Common layer types include dense (fully connected) layers, convolutional layers, recurrent layers, normalization layers, and pooling layers.

Neural networks may be used to implement the encoder, the classifier, or both.

The operation of a neural network is generally divided into two distinct phases: a training phase and an inference phase.

In the context of the present disclosure, the training phase refers to a stage during which parameters (such as weights and/or biases) of the encoder and of the classifier are learnt using a labeled training dataset. The training dataset comprises multiple training samples, each paired with a label.

A label refers to a class or target output associated with a training sample. A label may take the form of a scalar value, a categorical index, a one-hot vector, or a probability distribution over possible classes. Labels are used during training to evaluate the classification output of the classifier and compute a loss.

During the training phase, each training sample is first processed by the encoder to produce a digest. This digest, or a derivative thereof, is then passed to the classifier. The classifier produces a classification output, which is compared to the corresponding label to compute a classification loss. The encoder and classifier parameters are updated based on this loss using a suitable optimization algorithm.

The inference phase refers to the stage during which the trained encoder (and optionally the trained classifier) is used to process new input data. The encoder transforms each input into a digest, which may then be classified by the classifier or passed to another system for classification.

### Task-specific hashing and information reduction principles

Neural networks can be interpreted, in the context of classification, as surjective functions that map a high-dimensional input space to a lower-dimensional output space.

For instance, in the context of image classification using the CIFAR-10 dataset, the dataset comprises 60,000 32x32 RGB images distributed across ten distinct classes, with 6,000 images per class. A function mapping an image to its corresponding label in this scenario assigns the same label to 6,000 distinct samples.

Since multiple distinct input data samples may be mapped to the same output label, the classification process inherently involves a loss of information about the input data samples. This observation implies that the classifier does not need access to the full information content of an input data sample in order to correctly predict its associated label.

This information loss property is reminiscent of that exhibited by hash functions, which also map multiple distinct inputs to the same output representation. A hash function typically reduces input data to a compact, fixed-size representation that discards input-specific detail while preserving features relevant to a downstream task.

The present disclosure proposes a method that may be viewed as constructing a task-specific hash function in the form of a trainable encoder. Indeed, the encoder is configured to transform input data into a digest prior to classification. The classifier can operate on this digest or a derivative thereof to produce accurate predictions without requiring access to the original input data.

Unlike conventional hash functions, which are static and task-independent, the encoder described herein is learned jointly with the classifier and tailored to a specific classification task. This enables the encoder to discard residual or irrelevant information and retain only the features necessary for classification. This design may be referred to as on-demand sensitive hashing.

### Exemplary design constraints and requirements

To achieve the intended objectives, the encoder may be designed according to one or more task-specific or deployment-specific constraints. These constraints may relate to the nature of the information retained in the digest, the ability of the classifier to operate on the digest, and the resistance of the digest to input reconstruction.

In a first exemplary case, the encoder may be constrained to reduce the amount of information contained in the digest relative to the input data. This reduction may be reflected, for instance, by a statistically quantifiable decrease in mutual information between the input and the digest under a chosen data distribution.

In a second exemplary case, the encoder may be configured such that digests produced from training data samples lead to classification outputs that meet or exceed a predefined accuracy threshold when processed by the classifier. The accuracy threshold may be defined with respect to a validation dataset and an evaluation metric appropriate to the classification task, such as top-1 accuracy, top-k accuracy, or mean average precision.

In an exemplary embodiment, the encoder is configured to satisfy the constraints of both the first and second exemplary cases described above. In this exemplary embodiment, the encoder is designed to reduce the input dimensionality, ensuring that the output dimension is smaller than the input dimension. Additionally, by jointly training the encoder and the classifier, where the encoder's outputs serve as inputs to the classifier during training, the weights of both networks are updated iteratively after each training epoch, enabling the encoder to produce digests that are both compact and effective for classification.

In a third exemplary case, the encoder may be configured to produce digests that limit the recoverability of the original input data. For instance, the encoder architecture and training procedure may be selected such that a reconstruction model, trained to invert the digest to the input domain, achieves a reconstruction error above a predefined bound, as measured using a distance metric such as mean squared error, structural similarity, or perceptual loss. This constraint may be relevant in scenarios involving privacy protection or secure inference.

In another exemplary embodiment, the encoder is configured to satisfy the constraints of the first, second, and third exemplary cases. In this embodiment, the encoder is trained to reduce the input dimensionality and to enable accurate classification, as described above. Additionally, the encoder is trained to produce digests that are resistant to input reconstruction under an explicit threat model. The threat model may, for example, consider an adversary equipped with a generative adversarial network (GAN) trained to reconstruct input data from the digest, under the assumption that the adversary has access to the original training dataset. The encoder architecture and training procedure are selected such that, under this threat model, the reconstruction error achieved by the adversary exceeds a predefined threshold. The specific configuration of the encoder, for instance, a stack of convolutional layers followed by a linear projection layer, may be determined empirically or through formal analysis, depending on the classifier architecture and the classification problem being addressed.

### Privacy-preserving collaborative training

The proposed method is particularly well-suited for privacy-preserving training scenarios involving multiple data owners and third-party computational resources. In such settings, it is often necessary to train a classifier collaboratively, without exposing raw input data to external parties.

In this context, the encoder operates as a learnable obfuscation mechanism, transforming sensitive input data into digests that retain task-relevant features while discarding residual information. Unlike static transformations which have been shown to lack formal privacy guarantees, the proposed method relies on a jointly trained encoder and classifier, tailored to a specific classification task.

Prior techniques often aim to preserve classification accuracy by retaining as much input information as possible. However, this trade-off undermines the ability to provide formal or empirical guarantees of privacy. In contrast, the proposed method introduces intentional information loss through dimensionality reduction and task-specific encoder training, which improves robustness against reconstruction.

In exemplary embodiments, a data owner may wish to train a classifier using third-party resources without disclosing raw input data. The encoder may first be trained using cryptographic techniques such as homomorphic encryption, enabling encrypted gradient updates. After the initial phase, training may continue on the third-party infrastructure using plaintext digests only, ensuring that the raw inputs remain confidential.

Although the third party gains access to the digests in plaintext form, these digests contain only task-relevant information and are designed by construction not to support high-fidelity reconstruction of the input.

The effectiveness of the privacy protection in a given setup may be evaluated empirically by modeling an adversary (e.g., a generative reconstruction model) and measuring reconstruction performance against a predefined threshold.

### Encrypted training setup for privacy-preserving classification

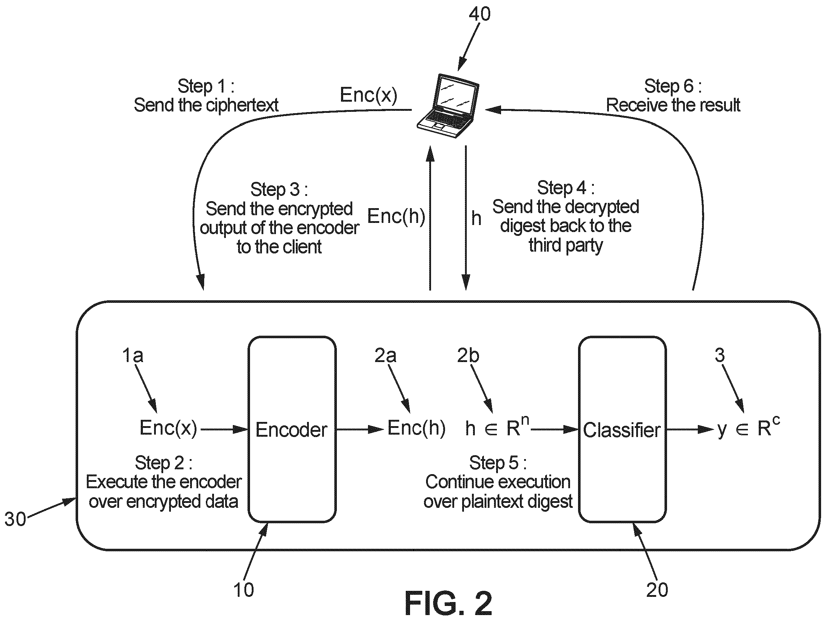

Figure 2 illustrates an exemplary embodiment of a computing system which comprises a classification system 30 and a plurality of user devices 40, although only a single user device 40 is shown for clarity.

The classification system 30 comprises at least an encoder 10 and a classifier 20, as described in previous sections. The encoder and classifier are connected in sequence and execute on shared infrastructure (e.g., cloud hardware or centralized training servers).

The user devices 40 are operated by distinct data owners and are responsible for managing raw input data, performing encryption and decryption operations, and interacting securely with the classification system 30.

Each user device 40 has access to its own raw input data samples.

The computing system is designed to support secure training or inference over encrypted data using homomorphic encryption techniques, without requiring the disclosure of plaintext input data samples to the classification system 30.

In the setup shown in Figure 2, the following sequence of actions may be performed for a given input data sample represented as a vector $x ∈ {ℝ}^{n}$,.

A user device 40 encrypts the raw input data sample by producing an encrypted input data sample 1a, denoted *Enc*(*x*), using a suitable encryption scheme, in particular a homomorphic encryption scheme such as a fully homomorphic encryption (FHE) scheme.

The encrypted input data sample 1a is transmitted to the classification system 30.

The encoder 10 within the classification system 30 then processes the encrypted input data sample 1a, and produces an encrypted digest 2a, represented as a vector $Enc \left(h\right) ∈ {ℝ}^{m}$, where *m* < *n.* This may be achieved by the encoder 10 without ever decrypting the encrypted input data sample 1a, thanks to the homomorphic properties of the encryption scheme.

The encrypted digest 2a is transmitted to the user device 40.

The user device 40 decrypts the digest using local key material and obtains the decrypted (plaintext) digest 2b, represented as vector $h ∈ {ℝ}^{m}$. The decrypted digest 2b is then transmitted to the classification system 30. In this exemplary embodiment, the decrypted digest 2b is a derivative of the encrypted digest 2a.

The classifier 20 receives the decrypted digest 2b and produces an output class prediction 3, represented as a vector $y ∈ {ℝ}^{c}$. The output may take the form of class scores, probabilities, or discrete labels.

Finally, the output class prediction 3 is transmitted to the user device 40.

This sequence allows the encoder to operate over encrypted data and ensures that the classification system 30 never sees any user input in plaintext. The decrypted digest 2b, which is derived from the encoder output, contains only task-relevant features and is explicitly constructed to omit residual information that could enable reconstruction of the original input sample.

To further enhance privacy and enable collaborative governance of the training process, the system may employ threshold decryption. In such a configuration, the encryption scheme supports splitting the decryption key among multiple users. For instance, in a (3,5) threshold scheme, the key is distributed among five user devices 40, and any three of them must cooperate to decrypt a digest. This prevents any single participant from accessing intermediate data unilaterally and ensures that decryption decisions reflect collective authorization.

Such threshold techniques may be implemented using secret-sharing protocols (e.g., Shamir's secret sharing) or threshold variants of lattice-based FHE. These mechanisms make it possible to:
securely manage encrypted model inputs and outputs,
prevent unilateral access to decrypted digests, and
enable collaborative learning under a well-defined trust model.

Overall, the computing system depicted in Figure 2 supports privacy-preserving collaborative training, where multiple parties can jointly train a model using shared infrastructure, without needing to exchange raw datasets or fully trust the compute environment. Sensitive user data is encrypted end-to-end, digests are jointly decrypted only when needed, and the classifier is trained only on these digests, minimizing exposure.

The effectiveness of this encrypted pipeline can be evaluated empirically by simulating an adversary (e.g., a generative model trained to reconstruct inputs from digests) and measuring whether reconstruction error exceeds a predefined threshold. In practice, the combined use of dimensionality reduction, encoder training, and FHE ensures that even if an adversary observes the digests, the likelihood of high-fidelity input reconstruction remains low.

### Examples of suitable deployment configurations

In certain embodiments, the encoder and classifier may be trained collaboratively by a plurality of entities, such as organizations, devices, or users, each holding local training data. In such cases, the encoder may be either:
pre-trained and shared among entities; or
trained in a federated or decentralized fashion, with encrypted or obfuscated updates exchanged across parties.

To reduce privacy risks, each entity may apply the encoder locally to generate digests, without transmitting the raw input data to a central server. Only the resulting training digests, or derivatives thereof, are shared or aggregated for training or evaluation purposes.

The output digest may be a fixed-length vector of numerical values, such as a real-valued embedding vector of predetermined size. This format facilitates efficient storage, comparison, and downstream processing.

In certain deployment scenarios, the digest may be transmitted to a remote system for classification. For instance, the encoder may run on a client device, and the digest may be sent to a cloud-based classifier that returns the classification result. This approach reduces data transmission overhead and supports on-device preprocessing for privacy or bandwidth constraints.

### Hardware and software implementation aspects

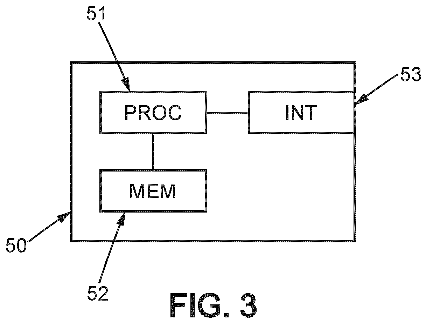

As illustrated in Figure 3, the method described herein may be implemented by a device 50 configured to execute a computer program. The device 50 comprises at least a processor 51, a memory 52, and a communication interface 53. The processor 51 is configured to execute instructions stored in the memory 52, and the communication interface 53 is configured to exchange data with other systems or devices.

The computer program may comprise instructions which, when executed by the processor 51, cause the processor to perform one or more steps of the method described in the present disclosure. The instructions may be written in any suitable programming language and may be stored in any executable format. The memory 52 may comprise a non-transitory computer-readable storage medium, such as a magnetic disk, solid-state drive, optical disk, flash memory, or RAM module. The memory 52 may be removable or embedded in the device 50.

In exemplary embodiments, the computer program may be deployed on devices implementing at least an encoder, or on systems implementing both an encoder and a classifier, whether integrated in a single device or distributed across a network. The encoder and classifier may execute on the same hardware or on distinct components connected via the communication interface 53.

The instructions stored in the memory 52 may include components for:
applying the encoder to input data to generate a digest;
transmitting the digest to a remote system or module via the communication interface 53; receiving classification outputs from the remote system or module; and
more generally, performing operations contributing to training and/or inference tasks as described herein, including secure digest handling, collaborative training workflows, or privacy-preserving processing.

## Claims

1. A computer-implemented method for determining a representation for use in a classification task, the method comprising:
applying, during an inference task, an encoder (10) to input data (1, 1a) having a first dimensionality to produce an output digest (2, 2a) having a second dimensionality lower than the first dimensionality,
wherein the encoder has been trained, during a training phase, jointly with a classifier (20) using a classification loss function applied to an output of the classifier,
the output of the classifier being produced by applying the classifier to a training digest having the second dimensionality or a derivative of the training digest,
the training digest being produced by applying the encoder to input training data having the first dimensionality.

2. The method of claim 1, wherein the encoder is configured such that the output digest prevents reconstruction of the input data beyond a predefined error threshold, when applied to a reconstruction model trained on the same dataset.

3. The method of any one of the preceding claims, wherein the encoder is trained using an adversarial training scheme in which a generative model is penalized for accurately reconstructing the input training data from the training digest.

4. The method of any one of the preceding claims, wherein the input training data is encrypted and the encoder is trained using a homomorphic encryption scheme.

5. The method of any one of the preceding claims, wherein the derivative of the training digest is in plaintext.

6. The method of any one of the preceding claims, wherein the encoder and the classifier are trained collaboratively by a plurality of entities (40) using encrypted or obfuscated input training data.

7. The method of any one of the preceding claims, wherein the encoder is shared among a plurality of entities, and the training digests are produced locally at each entity without transmitting the input training data.

8. The method of any one of the preceding claims, wherein the output digest is a fixed-length vector of numerical values.

9. The method of any one of the preceding claims, wherein the output digest is transmitted to a remote system for classification.

10. An encoder (10) configured to determine a representation for use in a classification task, the encoder being configured to, during an inference task:
receive input data (1, 1a) having a first dimensionality to produce an output digest (2, 2a) having a second dimensionality lower than the first dimensionality,
wherein the encoder has been trained, during a training phase, jointly with a classifier (20) using a classification loss function applied to an output of the classifier,
the output of the classifier being produced by applying the classifier to a training digest having the second dimensionality or a derivative of the training digest,
the training digest being produced by applying the encoder to input training data having the first dimensionality.

11. A computer system (30) comprising the encoder of claim 10 and the classifier trained jointly with the encoder.

12. A computer program comprising instructions which, when executed by at least one processor, cause the processor to perform the method according to any one of claims 1 to 9.

13. A non-transitory computer-readable storage medium storing instructions which, when executed by at least one processor, cause the processor to perform the method according to any one of claims 1 to 9.
